# EUROPÄISCHE PATENTANMELDUNG

(11) **EP 2 312 034 A1**
(43) Veröffentlichungstag der Anmeldung: **20.04.2011**
(21) Anmeldenummer: 10008248.6
(22) Anmeldetag: 06.08.2010
(51) Int. Cl.: D06B 3/10, D06C 15/00, F16L 11/08

(54) **Verfahren und Vorrichtung zur Imprägnierung eines Textilschlauches**

(30) Priorität: 13.10.2009 DE 102009049177
(71) Anmelder: VERITAS AG, 63571 Gelnhausen (DE)
(72) Erfinder: Daumas, Alexandre, 63571 Linsengericht (DE); Knopp, Matthias, 63526 Erlensee (DE)
(74) Vertreter: Grünecker, Kinkeldey, Stockmair & Schwanhäusser Anwaltssozietät

(57) **Zusammenfassung**

Die Erfindung betrifft ein Verfahren und eine Vorrichtung zur Imprägnierung eines Textilschlauchs. Um in einem einzigen kontinuierlichen Arbeitsgang ein kontrolliertes Imprägnieren des Textilschlauchs zu ermöglichen, ohne die vorherigen Elastizitätseigenschaften des Textilschlauchgewebes zu eliminieren und die Innenseite des schlauchartigen Gewebes zu benetzen, stellt die Erfindung ein Verfahren und eine Vorrichtung zur Imprägnierung eines Textilschlauchs bereit, wobei der Textilschlauch vor der Imprägnierung gestaucht wird.

## Beschreibung

Die Erfindung betrifft ein Verfahren und eine Vorrichtung zur Imprägnierung eines Textilschlauchs, wobei textile Schlauchware beispielsweise mit einer kautschukartigen Beschichtung beschichtet wird.

Bei Beschichtungsverfahren ergeben sich unterschiedliche Problemstellungen, die in verschiedenen Dokumenten beschrieben sind. So zeigt zum Beispiel die DE 24 37 658 einen Lösungsansatz für die Problematik, dass das Gewebe während der Badführung und im anschließenden Trocknungsprozess geweitet werden muss. Das Weiten ist notwendig, um den Schlauch auch zwischen dem Garn mit Beschichtungswerkstoff zu benetzen. Die vorgeschlagene Lösung aus dem Stand der Technik umfasst eine Spreizanordnung, die in den Schlauch eingeführt wird. Üblicherweise werden derartige Spreizvorrichtungen als schwimmende Dorne ausgelegt. Dabei umgeht diese Lösung schon die aus dem Stand der Technik bekannten Probleme. Diese Aufspreizvorrichtungen weiten den Schlauch auf seinen Nenndurchmesser auf, um die für dieses Verfahren typische Randbildungen (Bugbildung) und Querschnittsverformungen zu vermeiden. Dabei muss besonders darauf geachtet werden, dass die Zugkraft, die aus der Verformung des Schlauches aufgrund der Spreizvorrichtung resultiert, nicht zu groß wird. Dies würde dazu führen, dass das Gewebe sich zusammenzieht und nicht vollständig mit dem Beschichtungswerkstoff benetzt wird und nahezu jede Elastizität verliert.

Eine andere Erfindung, die in der DE 36 19 853 beschrieben wird, benutzt Druckluft, um den Schlauch nach der ersten Foulardierstufe aufzublasen. Anschließend erfolgt ein nun bugfreies Aufziehen der Flotte.

Die DE 30 29 331 zeigt einen Lösungsansatz, wie das Gewebe entlastet werden kann, um eine Verdichtung durch das Eigengewicht zu vermeiden. Dazu verwendet die Erfindung eine Anhubvorrichtung, deren beide Walzen mit einer höheren Geschwindigkeit rotieren als die Quetscheinheit. Es entsteht eine Kraft, die der Gravitation entgegenwirkt und den Schlauch dadurch gewichtsentlastet. Dieses Dokument stellt derzeit auch den nächstliegenden Stand der Technik dar.

Alle vorab genannten Verfahren oder Vorrichtungen zeigen jedoch keine Lösung, um in einem einzigen kontinuierlichen Arbeitsgang ein kontrolliertes Imprägnieren des Textilschlauchs zu ermöglichen, ohne die vorherigen Elastizitätseigenschaften des Textilschlauchgewebes zu eliminieren und die Innenseite des schlauchartigen Gewebes zu benetzen. Eine weitere Aufgabenstellung besteht in der Regelbarkeit der Gewebeaufweitung, um die Eigenschaften des Endprodukts einstellen zu können.

Zur Lösung dieser Aufgabe stellt die Erfindung ein Verfahren zur Imprägnierung eines Textilschlauchs bereit, wobei der Textilschlauch vor der Imprägnierung gestaucht wird. Die Erfindung beinhaltet außerdem eine Vorrichtung mit der sich das Verfahren ausführen lässt. Im Rahmen der Erfindung werden die Begriffe Beschichten und Tränken als Synonyme zu dem Begriff Imprägnieren verwendet. Unter Stauchung wird im Rahmen dieser Erfindung eine relative Längenänderung des Textilschlauchs bezeichnet, die sich vorzugsweise durch eine Druckbeanspruchung des Textilschlauchs ergibt. Der Begriff Stauchung ist gegensätzlich zu dem Begriff Dehnung zu verstehen, wobei auf Grund der Gegensätze der Begriffe entsprechende Beziehungen gelten. Durch Stauchen lässt sich der Textilschlauch in seiner Form, seiner Länge oder Dicke verändern, wodurch dessen Fähigkeit zur Aufnahme des Imprägniermittels sowie das mechanische Verhalten des nach dem beschriebenen Verfahren fertig imprägnierten Schlauchs gezielt beeinflusst werden kann. Vorzugsweise handelt es sich bei dem Textilschlauch um einen Geflechtsschlauch. Es können zwei unterschiedliche Gattungen von Geflechten betrachtet werden. Im ersten Fall handelt es sich um ein im wesentlichen flächendeckendes Geflecht. Charakterisierend dafür ist die Anzahl der Garne und deren Stärke. Im zweiten Fall spricht man von einem offenen Geflecht. Während die Angaben für den Stauchgrad für beide Gattungen zutreffend sind, unterscheiden sich die Flechtwinkel aufgrund der Geflechtsstruktur. Versuche mit dem der Erfindung zugrunde liegenden Geflecht haben ergeben, dass ein Flechtwinkel α von 35° einen spannungsfreien Zustand darstellt. Der für den erfindungsgemäßen Textilschlauch bevorzugte Bereich bewegt sich zwischen 30° und 45°. Der ideale Bereich liegt zwischen 35° und 43°. Einem Stauchgrad von 145% (= Maximum) steht ein Flechtwinkel von 55° gegenüber, 126% Stauchgrad entsprechen einem Flechtwinkel von 45° und 115% entsprechen 43°. Bezüglich des Aufnahmevermögens des Geflechts haben jüngste Versuche gezeigt, dass eine Flottenaufnahme bis zu 150% möglich ist. Bei Versuchsteilen hat sich eine Flottenaufnahme von 125% eingestellt.

Bevorzugte Weiterbildungen der Erfindung sind Gegenstände der Unteransprüche. Weitere vorteilhafte Ausgestaltungen der Erfindung ergeben sich durch Kombinationen der Merkmale der Unteransprüche oder einzelner Teile davon.

Es kann sich als hilfreich erweisen, wenn der Textilschlauch entlang der Schlauchachse gestaucht wird, so dass das spezifische Gewicht des Textilschlauchs pro Längeneinheit ansteigt. Dadurch kann der Textilschlauch in radialer Richtung bzw. in die Breite wachsen und es steht eine größere Fläche zur Aufnahme des Imprägniermittels zur Verfügung.

Es kann sich als nützlich erweisen, wenn der Textilschlauch in mehreren Stufen gestaucht wird. Dadurch kann das Gewebe des Textilschlauchs besonders schonend behandelt werden und optimal in die bestimmungsgemäße Form zur Imprägnierung überführt werden.

Es kann sich als praktisch erweisen, wenn überschüssiges Imprägniermittel, vorzugsweise durch Abquetschen, nachträglich von dem Textilschlauch entfernt wird. Im einem bevorzugten Verfahren wird der Textilschlauch auf einem sog. Foulard einer Nassbehandlung unterzogen, die auch als Foulardierung oder Vollbadimprägnierung bezeichnet werden kann. Dabei wird der Textilschlauch bzw. das Substrat im breiten Zustand durch einen Trog geleitet, in welchem sich das Imprägniermittel befindet. Alternativ kann das Imprägniermittel anderweitig aufgetragen werden, bspw. aufgesprüht werden. Danach wird der mit dem Imprägniermittel beaufschlagte Textilschlauch durch zwei oder mehrere Walzenpaare geleitet, um das überschüssige Imprägniermittel (die sog. "Flotte") auf ein genau definiertes Maß abzuquetschen und den Textilschlauch weiter zu transportieren. Die Menge des aufgenommenen Imprägniermittels kann in Prozent zum Rohgewicht des Textilschlauchs angegeben werden, wobei eine Imprägniermittel- bzw. Flottenaufnahme (oder auch Abquetscheffekt) von 40 % bedeutet, dass 100 kg des Textilschlauchs 40 kg Imprägniermittel bzw. Flotte aufnehmen. Grundsätzlich gilt, dass möglichst viel überschüssige Flotte durch das Abquetschen entfernt wird. Im Rahmen der Erfindung beträgt die Imprägniermittel- bzw. Flottenaufnahme zwischen 20 und 200 %, vorzugsweise zwischen 50 und 200 %, , bevorzugt zwischen 50 und 150 %, weiter bevorzugt zwischen 80 und 150 %, noch weiter bevorzugt zwischen 80 und 125 %, und besonders bevorzugt zwischen 100 und 125 %.

Es kann sich als hilfreich erweisen, wenn der Textilschlauch während der Stauchung und/oder während der Imprägnierung und/oder während der Entfernung des überschüssigen Imprägniermittels kontinuierlich entlang seiner Schlauchachse gefördert wird. Dadurch lässt sich das gesamte Verfahren äußerst zeitsparend in einem kontinuierlichen Arbeitsgang ausführen, da eine Handhabung von Zwischenprodukten zwischen den einzelnen Fertigungsstrecken entfällt.

Es kann vorteilhaft sein, wenn der Textilschlauch in einem flachgedrückten Zustand gestaucht wird und/oder imprägniert wird. Dadurch kann verhindert werden, dass das Imprägniermittel in das Schlauchinnere vordringt und die Schlauchinnenseite benetzt.

Es kann nützlich sein, wenn der Stauchgrad des Textilschlauchs rechnergestützt geregelt und/oder gesteuert wird. Über den Stauchgrad kann der Gewebezustand und damit sowohl die Aufnahmefähigkeit des Textilschlauchs für das Imprägniermittel als auch die Elastizitätseigenschaften des Endprodukts nicht nur in radialer sondern auch in axialer Richtung eingestellt werden. Je nach einem gewünschten Effekt oder bspw. in Abhängigkeit einer Viskosität des Imprägniermittels kann der Stauchgrad geändert werden, so dass optimale Imprägnierungsergebnisse erzielt werden können. Der Stauchgrad wird vorzugsweise durch die Gewichtszunahme des Textilschlauchs nach der Stauchung ausgedrückt und liegt beispielsweise im Bereich zwischen 50 und 200%, vorzugsweise im Bereich zwischen 80 und 175%, bevorzugt im Bereich zwischen 40 und 60%.

Es kann praktisch sein, wenn der Textilschlauch derart gestaucht wird, dass ein Flechtwinkel des gestauchten Textilschlauchs größer ist als ein Flechtwinkel des ungestauchten Textilschlauchs. Mit ansteigendem Flechtwinkel steigt die Aufnahmefähigkeit des Textilschlauchs für das Imprägniermittel.

Ein weiterer Aspekt der Erfindung betrifft eine Vorrichtung zur Imprägnierung eines Textilschlauchs, umfassend: eine Staucheinheit zur Stauchung des Textilschlauchs und eine Imprägniereinheit zur Imprägnierung des gestauchten Textilschlauchs. Diese Vorrichtung ermöglicht es, den Textilschlauch nach dem obigen Verfahren zu fertigen und die damit einhergehenden Vorteile zu erzielen.

Es kann sich als vorteilhaft erweisen, wenn die Vorrichtung einen Foulard aufweist, um überschüssiges Imprägniermittel nachträglich durch Abquetschen von dem Textilschlauch zu entfernen. Dadurch lässt sich die Menge des aufgenommenen Imprägniermittels genau dosieren.

In einer bevorzugten Weiterbildung der Erfindung wird der Textilschlauch in einem kontinuierlichen Strang durch die Staucheinheit und/oder die Imprägniereinheit und/oder durch den Foulard gefördert, so dass eine Handhabung von Zwischenprodukten nach dem Durchlaufen der jeweiligen Einheit(en) entfällt.

Es kann hilfreich sein, wenn die Staucheinheit in Förderrichtung des Textilschlauchs vor der Imprägniereinheit zumindest eine, vorzugsweise reibschlüssig, mit dem Textilschlauch koppelbare Antriebseinrichtung aufweist, bspw. eine Walze mit eigenem Antrieb. Durch eine angetriebene Walze kann während der Förderung des Schlauchs in Förder- bzw. Vorschubrichtung tangential zum Walzenumfang eine Schubkraft entlang der Schlauchachse auf den Textilschlauch übertragen werden, die für eine Stauchung des Textilschlauchs sorgt. Die Größe der Schubkraft hat Einfluss auf den Flechtwinkel und damit auch unmittelbar auf die Breite des Textilschlauchs. Je größer die Schubkraft, umso größer ist auch der Flechtwinkel und damit auch die Öffnung des Gewebes. Somit kann sowohl mehr Imprägniermittel aufgenommen als auch der Textilschlauch auf einen definiert gestauchten Zustand fixiert werden. Ein kleiner Flechtwinkel steht für ein gespanntes und schmales Gewebe und ein größerer Flechtwinkel für ein entspanntes und breites Gewebe.

Es kann hilfreich sein, wenn die Staucheinheit zumindest zwei in Förderrichtung des Textilschlauchs beabstandete Antriebseinrichtungen, insbesondere Walzen, aufweist, die, vorzugsweise reibschlüssig, mit dem Textilschlauch koppelbar sind und sich im Betriebszustand der Vorrichtung mit unterschiedlicher Umfangsgeschwindigkeit drehen, wobei die Umfangsgeschwindigkeiten und/oder die Achsen der Antriebseinrichtungen vorzugsweise zueinander verstellbar sind und die Umfangsgeschwindigkeiten der Antriebseinrichtungen bevorzugt in Förderrichtung des Textilschlauchs abnehmen. Bevorzugt ist die Achse von zumindest einer der Antriebseinrichtungen bzw Walzen in horizontaler und/oder vertikaler Richtung verstellbar, so dass die Achsabstände benachbarter Walzen und/oder die Umfangslänge, über welche der geförderte Textilschlauch an einem Walzenumfang anliegt, verändert werden können. Dadurch kann der Textilschlauch besonders gewebeschonend und mit hoher Genauigkeit in mehreren Stufen genau auf den gewünschten Stauchgrad gebracht werden.

Es kann sich als vorteilhaft erweisen, wenn die Vorrichtung eine Regel-/Steuereinheit zur Regelung und/oder Steuerung der Staucheinheit, der Imprägniereinheit und/oder des Foulards umfasst. Vorzugsweise werden durch die Regel-/Steuereinheit die Umfangsgeschwindigkeiten und/oder die Achsen der Walzen der Staucheinheit, der Imprägniereinheit und/oder des Foulards zueinander verstellt und in vorteilhafter Weise aufeinander abgestimmt, dass das Gewebe des Textilschlauchs äußerst schonend behandelt wird und der gewünschte Stauchgrad des Textilschlauchs mit hoher Genauigkeit erreicht werden kann.

Eine alternative Staucheinheit umfasst Klemmeinrichtungen, welche seitlich am Rand des Textilschlauchs angreifen und das Material rechtwinklig zur Schlauchachse auseinanderziehen. Auch andere alternative Staucheinrichtungen sind vorstellbar.

Noch eine alternative Staucheinheit ist derart ausgebildet, um den Textilschlauch durch Gravitationswirkung zu stauchen.

Das Funktionsprinzip der Erfindung wird nachstehend anhand der bevorzugten Ausführungsbeispiele erläutert.

### Kurze Beschreibung der Figuren

Es zeigen:

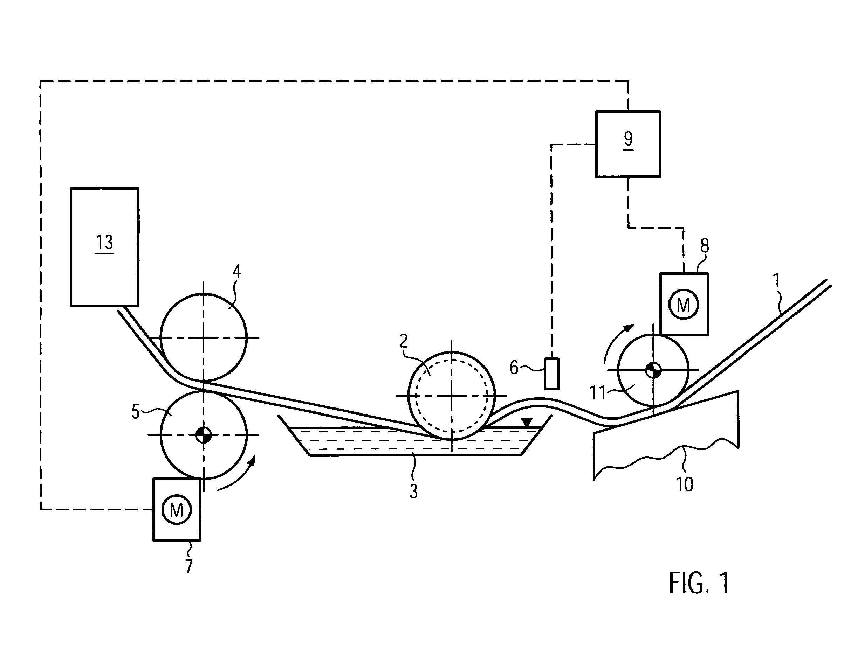

- Fig. 1:: eine schematische Ansicht einer erfindungsgemäßen Vorrichtung zur Imprägnie- rung textiler Schlauchware nach einem ersten Ausführungsbeispiel der Erfin- dung.
- Fig. 2a:: Querschnittsansichten des Textilschlauchs vor und nach der Stauchung.
- Fig. 2b:: schematische Ansichten des Textilschlauchs zur Darstellung des Flechtwinkels vor und nach der Stauchung.

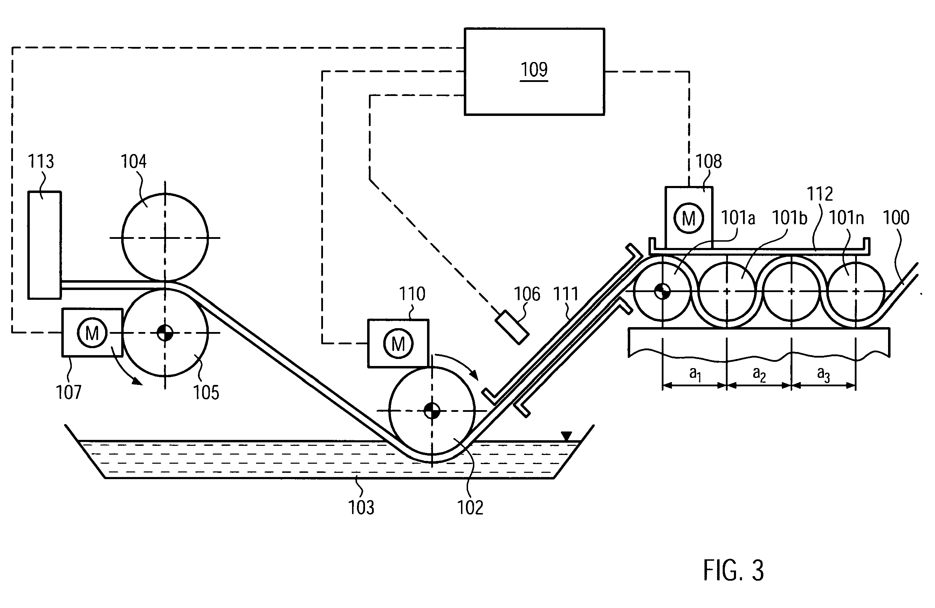

- Fig. 3:: eine schematische Ansicht einer erfindungsgemäßen Vorrichtung zur Imprägnie- rung textiler Schlauchware nach einem zweiten Ausführungsbeispiel der Erfin- dung.
- Fig. 4:: ein Flussdiagramm zur Darstellung einer Abfolge von Prozessschritten in einem erfindungsgemäßen Verfahren zur Imprägnierung textiler Schlauchware nach ei- ner ersten Variante.
- Fig. 5:: ein Flussdiagramm zur Darstellung einer Abfolge von Prozessschritten in einem erfindungsgemäßen Verfahren zur Imprägnierung textiler Schlauchware nach ei- ner zweiten Variante.
- Fig. 6: eine schematische Ansicht einer erfindungsgemäßen Vorrichtung zur Imprägnie- rung textiler Schlauchware nach einem dritten Ausführungsbeispiel der Erfin- dung.

### Detaillierte Beschreibung der bevorzugten Ausführungsbeispiele

Eine erfindungsgemäße Vorrichtung zur Durchführung des erfindungsgemäßen Verfahrens umfasst im wesentlichen eine Staucheinheit in Gestalt einer Schubwalze 11, eine Imprägniereinheit, bestehend aus einem Beschichtungsbad 3 und einer Umlenkrolle 2, und einen Foulard, bestehend aus den Quetschwalzen 4 und 5, sowie mindestens einen Sensor 6 zur Überwachung der Gewebeausrichtung des Textilschlauchs 1. Imprägniereinheit und Foulard bilden gemeinsam ein Foulardierwerk. Die erfindungsgemäße Vorrichtung kann auch als Foulardieranlage bezeichnet werden.

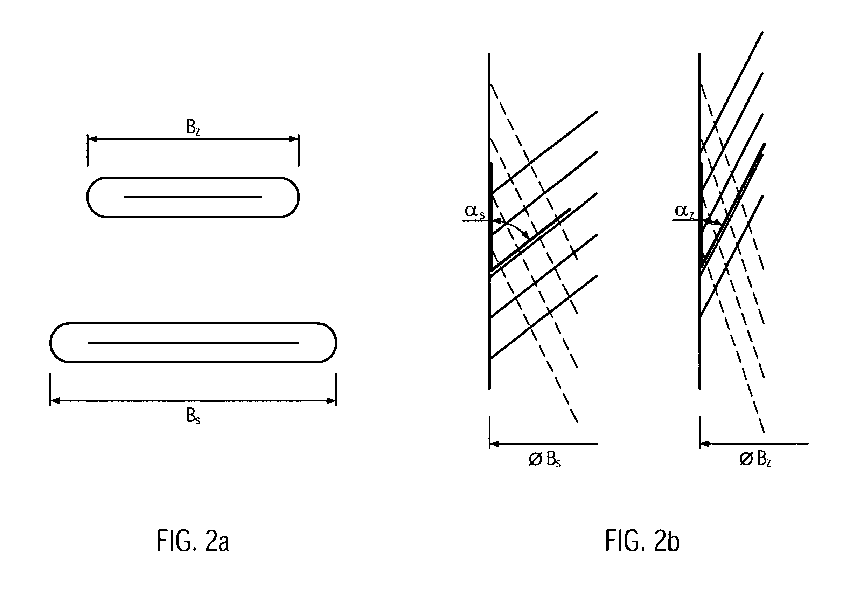

Der zu beschichtende Schlauch 1 wird von den Walzen 4,5 des Quetschwerks in das Beschichtungsbad (Flotte) 3 eingezogen und dort von der Umlenkrolle 2 in einer vorbestimmten Badtiefe gehalten. Das Bad besteht aus LSR (Flüssigsilikon) und wird in einem entsprechenden Behälter bevorratet. In Förderrichtung des Textilschlauchs 1 vor dem Foulardierwerk befindet sich mindestens eine Schubwalze 11. Der zu beschichtende Schlauch 1 wird zwischen einem Support 10 und der Schubwalze 11 durchgeführt. Dabei rotiert die Schubwalze 11 mit einer größeren Umfangsgeschwindigkeit als die beiden Quetschwalzen 4 und 5. Daraus ergibt sich eine Schubkraft in Richtung der Umlenkrolle 2, die für eine Stauchung des Schlauchgewebes sorgt. Die Größe der Schubkraft hat Einfluss auf den Flechtwinkel und damit auch unmittelbar auf die Breite B des Schlauchs, wie in Figur 2a zu sehen ist. Die Breite Bz steht für den ungestauchten Schlauch bzw. für ein gespanntes Gewebe und die größere Breite Bs steht für den gestauchten Schlauch bzw. für ein entspanntes Gewebe. Je größer die Schubkraft, umso größer ist auch der Flechtwinkel α und damit auch die Öffnung des Gewebes. Somit kann mehr Flüssigsilikon aufgenommen werden. Entsprechend steht ein kleiner Flechtwinkel αz für ein gespanntes und schmales Gewebe und ein größere Flechtwinkel αs für ein entspanntes und breites Gewebe (Fig. 2b). Der Flechtwinkel ist die Abweichung in Grad zwischen der Längsachse und der Führung des Garns innerhalb des Gewebes. Je größer die Steigung (eine Umwindung von 360 Grad) der Garne ist, umso kleiner ist der Flechtwinkel und umgekehrt.

Der Flechtwinkel α wird von einem Sensor 6 überwacht, der Daten an eine Steuerung 9 übergibt. Die Steuerung 9 wiederum ist mit dem Antriebsmotor 8 der Schubwalze verbunden. Über die Rotationsgeschwindigkeit der Schubwalze 11 gegenüber der Rotationsgeschwindigkeit der Walzen 4 und 5 kann der Gewebezustand beeinflusst werden. Die Steuerung 9 gibt nach dem Soll-/Istvergleich entsprechende Befehle an den Antriebsmotor 8 der Schubwalze 11. Je nach Vorgabe wird dann die Zustellgeschwindigkeit variiert, um den Winkel α und damit die Gewebeöffnung entsprechend einzustellen. Nach dem Flüssigsilikonbad läuft das Schlauchgewebe in den Foulard ein und die Walzen 4,5 quetschen das Beschichtungsmaterial in das Gewebe ein. Die Steuerung 9 ist mit dem Antriebsmotor 7 der Walzen 4,5 verbunden, um die Achsenabstände und damit die Flottenaufnahme des Textilschlauchs zu regeln ebenso wie die Rotationsgeschwindigkeit der Walzen 4 und 5. Überschüssiges Material wird heraus gequetscht und läuft zurück in das Bad. Eine besondere Ausgestaltung der Walzen 4,5 z.B. mit einer Elastomerschicht hat Einfluss auf die Bildung der weiter oben erwähnten Bugkante. Es hat sich gezeigt, dass Shorehärten der Elastomerschicht im Bereich von 30 bis 70 gute Ergebnisse liefern und eine Bugbildung vermeiden bzw. stark unterdrücken. Am Ende dieser Vorrichtung läuft das Schlauchgewebe in einen Ofen 13 ein, wo die Beschichtung fixiert wird. Dadurch ergibt sich die geforderte und anwendungsspezifische Nennweite des Schlauchs.

In einem zweiten Ausführungsbeispiel, das im Wesentlichen auf dem ersten Ausführungsbeispiel beruht, weist die Vorrichtung eine mehrstufige Staucheinheit auf sowie eine Umlenkwalze 102 mit eigenem Antriebsmotor 110 auf, der mit der Steuerung 109 verbunden ist. Die Staucheinheit umfasst mindestens eine angetriebene Schubwalze 101 a und weitere Schubwalze 101 b ... 101 n. Die Schubwalzen weisen alle den gleichen Außendurchmesser auf, jedoch variiert die Umfangsgeschwindigkeit der jeweiligen Walzen. Dies kann durch Riemenscheiben bzw. Ritzel erfolgen, die mit unterschiedlichen Durchmessern an den jeweiligen Walzen angebracht sind. Es ist aber auch denkbar, dass jede Walze für sich einen Direktantrieb aufweist, der stufenlos gesteuert und dessen Rotationsgeschwindigkeit bei Bedarf geregelt werden kann. Die stufige Stauchung hat den Vorteil, dass das Gewebe schonend und gleichmäßig auf die gewünschte Breite gebracht und damit auch die gewünschte Öffnung des Gewebes erzeugt wird. Zur Regelung ist wieder mindestens ein Sensor 106 vorgesehen, der den geometrischen Zustand des Gewebes erfasst. Die ermittelten Daten werden an die Prozess-Steuerung 109 übergeben. Die Steuerung steuert entsprechend der Ergebnisse eines Soll-/Istvergleichs den/die Antriebsmotor(en) der Schubwalzen 101a ... 101 n. Die Schubwalzen sind zur besseren Führung der Gewebebahnen mit Führungsblechen bzw. -platten 112 versehen, um eine Faltenbildung zu verhindern. Ebenso ist die freie Strecke zwischen der Staucheinheit und der Umlenkwalze 102 durch Platten 111 gegen Faltenbildung gestützt. Die Abstände a1 ...an zwischen den Walzen 101 a ...101 n sind variabel ausgelegt. In einer ersten Ausführung lassen sich die Achsen horizontal verstellen. Je kleiner der Abstand a, umso größer ist die Berührungsfläche des Gewebes auf den jeweiligen Walzen. Es ist auch denkbar die Achsen der Schubwalzen 101 a ... 101 n vertikal oder vertikal und horizontal verstellbar auszuführen, um eine maximale Kontaktfläche der Schlauchgewebebahn mit den Schubwalzen zu erzielen. In diesem Ausführungsbeispiel ist vorgesehen, dass die Umlenkwalze 102 ebenfalls angetrieben ist. Die Drehzahl beträgt etwa das Zwei- bis Zehnfache, vorzugsweise das Dreifache der Drehzahl der ersten Stauchwalze 101 a. Damit die zuvor gestauchte Gewebebahn nicht wieder gereckt wird, ist vorgesehen, dass die Umlenkwalze 102 eine glatte Oberfläche aufweist und damit quasi einen Reibantrieb darstellt. Wie im ersten Ausführungsbeispiel wird der zu beschichtende Schlauch 100 von den Walzen 104, 105 des Quetschwerks (Foulard) in das Beschichtungsbad (Flotte) 103 eingezogen und dort von der Umlenkrolle 102 in einer vorbestimmten Badtiefe gehalten. Am Ende der Vorrichtung läuft das Schlauchgewebe in einen Ofen 113 ein, wo die Beschichtung fixiert wird.

Alternativ kann die Stauchung des Schlauchs auch auf eine andere Art und Weise erfolgen. Dazu werden statt den Schubwalzen Klemmeinrichtungen verwendet, welche seitlich am Rand der Schlauchware angreifen und das Material rechtwinklig zur Vorschubrichtung auseinanderziehen.

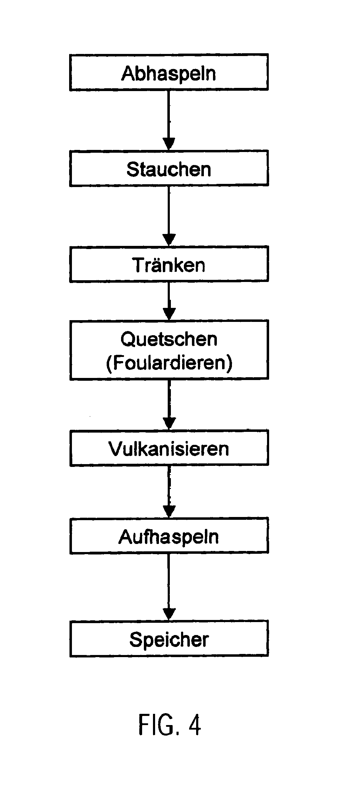

Das Verfahren zur Durchführung der Erfindung kann auf zwei unterschiedliche Weisen umgesetzt werden. Eine erste Möglichkeit ist in Fig. 4 dargestellt. Hier werden die geflochtenen Gewebe aufgewickelt an der Foulardieranlage zur Verfügung gestellt. Die Schlauchbahnen werden dann vom Abwickler in die Anlage eingeführt und durchlaufen den Beschichtungsprozess wie in Fig. 4 dargestellt. Nach dem Vulkanisieren/Vernetzen wird die beschichtete Schlauchware wieder aufgewickelt.

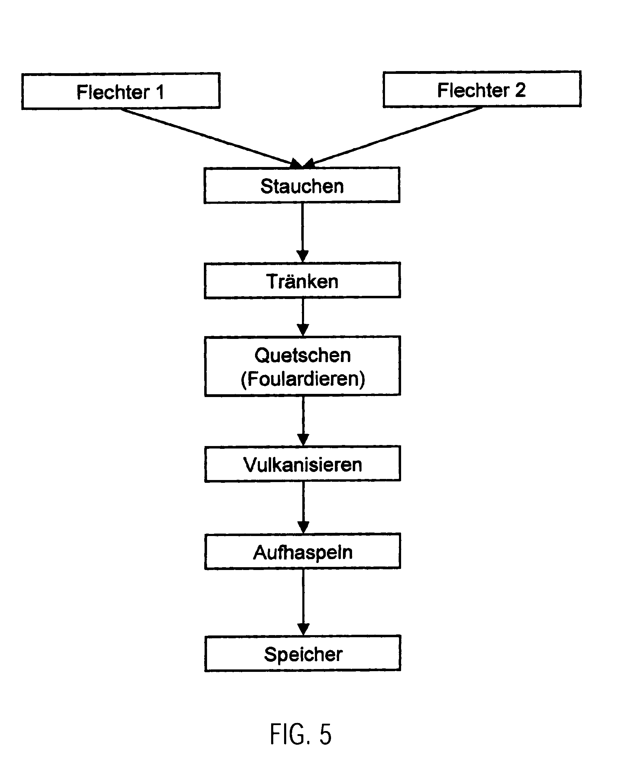

Eine zweite Möglichkeit sieht vor, den kompletten Herstellungsprozess in einer Linie abzubilden. Nach dieser in Fig. 5 dargestellten Variante führen zwei Flechtmaschinen der Foulardieranlage den Geflechtschlauch zu. Wenn eine Flechtmaschine leer läuft, führt die zweite den Arbeitsgang weiter. Somit kann der Beschichtungsvorgang ununterbrochen laufen.

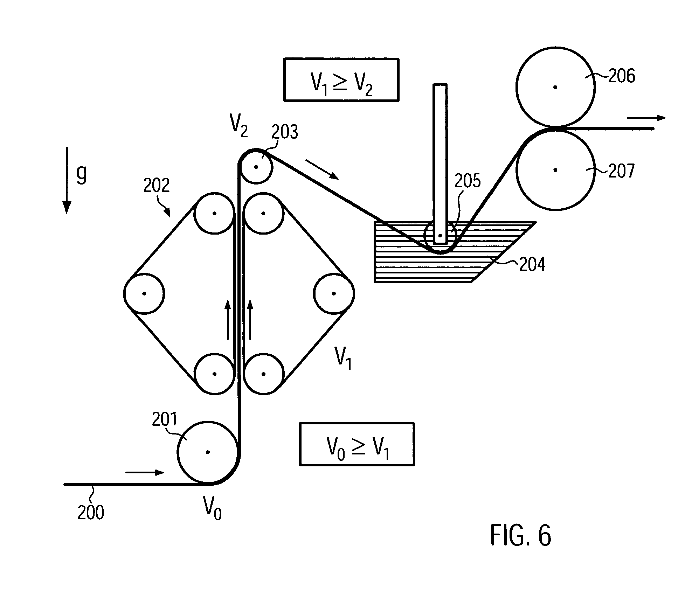

Fig. 6 zeigt eine schematische Ansicht einer erfindungsgemäßen Vorrichtung zur Imprägnierung textiler Schlauchware nach dem dritten Ausführungsbeispiel der Erfindung. In diesem Ausführungsbeispiel erfolgt das Stauchen des Textilschlauchs durch Gravitationswirkung. Die Vorrichtung umfasst im wesentlichen eine Staucheinheit mit einer Schubeinrichtung bzw. Schub- und Umlenkwalze 201, einer Zugmitteleinrichtung 202 mit zwei symmetrisch angeordneten und synchron laufenden Zugmitteltrieben und einer weiteren Umlenkwalze 203, eine Imprägniereinheit, bestehend aus einem Beschichtungsbad 204 und einer Umlenkrolle 205, und einen Foulard, bestehend aus den Quetschwalzen 206 und 207, sowie mindestens einen Sensor (nicht dargestellt) zur Überwachung der Gewebeausrichtung des Textilschlauchs 1. Im Betrieb wird der Textilschlauchrohling 200 zur Schub- und Umlenkwalze 201 geführt, welche sich mit Umfangsgeschwindigkeit v₀ dreht. Der Textilschlauchrohling 200 liegt vorzugsweise schlupffrei über ein Viertel des Umfang an der Schub- und Umlenkwalze 201 an, und wird aus einer im wesentlichen horizontalen Vorschubrichtung in einer vertikale Vorschubrichtung umgelenkt, um entgegengesetzt zur Gewichtskraft g in die Zugmitteleinrichtung 202 einzutreten. Die als Reibriemen ausgebildeten Zugmittel der Zugmitteltriebe 202 bewegen sich mit Umfangsgeschwindigkeit v₁, wobei v₀ ≥ v₁, so dass der Textilschlauchrohling 200 durch Gravitationswirkung zwischen der Schub-und Umlenkwalze 201 und der Zugmitteleinrichtung 202 gestaucht wird. Über die Umlenkwalze 203, die sich mit der Umfangsgeschwindigkeit v₂ dreht, wobei v₁ ≥ v₂, verlässt der Textilschlauchrohling 200 den vertikalen Vorschubabschnitt und tritt in die Imprägniereinheit ein. Wie in den vorangegangenen Ausführungsbeispielen wird der nun imprägnierte Textilschlauch 200 von den Walzen 206, 207 des Quetschwerks (Foulard) in das Beschichtungsbad (Flotte) 204 eingezogen und dort von der Umlenkrolle 205 in einer vorbestimmten Badtiefe gehalten. Am Ende der Vorrichtung läuft das Schlauchgewebe in einen Ofen (nicht gezeigt) ein, wo die Beschichtung fixiert wird. Regel-/Steuereinheiten zur Regelung und/oder Steuerung der Staucheinheit, der Imprägniereinheit und/oder des Foulards können wie in den vorangegangenen Ausführungsbeispielen vorgesehen werden. Der Prozessablauf gestaltet sich vorzugsweise wie nach Fig. 4 oder 5.

Die Erfindung bietet folgende Vorteile und Anwendungsmöglichkeiten:

Der Schlauch behält im Wesentlichen seine elastischen Eigenschaften nicht nur in radialer sondern auch in axialer Richtung. Die Beschichtungsdicke und Durchdringung der Silikonbeschichtung des Gewebes können gezielt bestimmt werden. Des Weiteren ist es mit dem erfindungsgemäßen Verfahren möglich, eine Beschichtung durchzuführen, die nicht bis auf die Innenschicht durchdringt (notwendig für die elastischen Eigenschaften).

## Patentansprüche

1. Verfahren zur Imprägnierung eines Textilschlauchs (1; 100), **dadurch gekennzeichnet, dass** der Textilschlauch (1; 100) vor der Imprägnierung gestaucht wird.

2. Verfahren nach Anspruch 1, **dadurch gekennzeichnet, dass** der Textilschlauch (1 ; 100) entlang der Schlauchachse gestaucht wird, so dass das spezifische Gewicht des Textilschlauchs (1; 100) pro Längeneinheit ansteigt.

3. Verfahren nach einem der vorangegangenen Ansprüche, **dadurch gekennzeichnet, dass** der Textilschlauch (1; 100) in mehreren Stufen (101 a..n) gestaucht wird.

4. Verfahren nach einem der vorangegangenen Ansprüche, **dadurch gekennzeichnet, dass** überschüssiges Imprägniermittel, vorzugsweise durch Abquetschen, nachträglich von dem Textilschlauch (1; 100) entfernt wird.

5. Verfahren nach einem der vorangegangenen Ansprüche, **dadurch gekennzeichnet, dass** der Textilschlauch (1; 100) während der Stauchung und/oder während der Imprägnierung und/oder während der Entfernung des überschüssigen Imprägniermittels kontinuierlich entlang seiner Schlauchachse gefördert wird.

6. Verfahren nach einem der vorangegangenen Ansprüche, **dadurch gekennzeichnet, dass** der Textilschlauch (1; 100) in einem flachgedrückten Zustand gestaucht wird und/oder imprägniert wird.

7. Verfahren nach einem der vorangegangenen Ansprüche, **dadurch gekennzeichnet, dass** der Stauchgrad des Textilschlauchs (1; 100) rechnergestützt geregelt und/oder gesteuert wird.

8. Verfahren nach einem der vorangegangenen Ansprüche, **dadurch gekennzeichnet, dass** der Textilschlauch (1; 100) derart gestaucht wird, dass ein Flechtwinkel des gestauchten Textilschlauchs (1; 100) größer ist als ein Flechtwinkel des ungestauchten Textilschlauchs (1; 100).

9. Vorrichtung zur Imprägnierung eines Textilschlauchs (1; 100), umfassend: eine Staucheinheit zur Stauchung des Textilschlauchs (1; 100) und eine Imprägniereinheit (2, 3; 102, 103) zur Imprägnierung des gestauchten Textilschlauchs (1; 100).

10. Vorrichtung nach Anspruch 9, **dadurch gekennzeichnet, dass** die Vorrichtung einen Foulard (4, 5; 104, 105) aufweist, um überschüssiges Imprägniermittel nachträglich von dem Textilschlauch (1; 100) zu entfernen.

11. Vorrichtung nach einem der vorangegangenen Ansprüche, **dadurch gekennzeichnet, dass** die Vorrichtung derart ausgebildet ist, dass der Textilschlauch (1; 100) in einem kontinuierlichen Strang durch die Staucheinheit (10, 11; 101a..n) und/oder die Imprägniereinheit (2, 3; 102, 103) und/oder durch den Foulard (4, 5; 104, 105) gefördert wird.

12. Vorrichtung nach einem der vorangegangenen Ansprüche, **dadurch gekennzeichnet, dass** die Staucheinheit (10, 11; 101a..n) in Förderrichtung des Textilschlauchs (1; 100) vor der Imprägniereinheit (2, 3; 102, 103) zumindest eine, vorzugsweise reibschlüssig, mit dem Textilschlauch (1; 100) koppelbare Antriebseinrichtung (10; 101 a) aufweist.

13. Vorrichtung nach einem der vorangegangenen Ansprüche, **dadurch gekennzeichnet, dass** die Staucheinheit zumindest zwei in Förderrichtung des Textilschlauchs (100) beabstandete Antriebseinrichtungen (101a..n) aufweist, die, vorzugsweise reibschlüssig, mit dem Textilschlauch (100) koppelbar sind und sich im Betriebszustand der Vorrichtung mit unterschiedlicher Umfangsgeschwindigkeit drehen, wobei die Umfangsgeschwindigkeiten und/oder die Achsen der Antriebseinrichtungen (101 a..n) vorzugsweise zueinander verstellbar sind und die Umfangsgeschwindigkeiten der Antriebseinrichtungen bevorzugt in Förderrichtung des Textilschlauchs (100) abnehmen.

14. Vorrichtung nach einem der vorangegangenen Ansprüche, **dadurch gekennzeichnet, dass** die Vorrichtung eine Regel-/Steuereinheit (9; 109) zur Regelung und/oder Steuerung der Staucheinheit (10, 11; 101 a..n), der Imprägniereinheit (2, 3; 102, 103) und/oder des Foulards (4, 5; 104, 105) umfasst.

15. Vorrichtung nach einem der vorangegangenen Ansprüche, **dadurch gekennzeichnet, dass** die Staucheinheit Klemmeinrichtungen umfasst, welche seitlich am Rand des Textilschlauchs angreifen und das Material rechtwinklig zur Schlauchachse auseinanderziehen.
